(19) Europäisches Patentamt / European Patent Office / Office européen des brevets

(11) **EP 2 989 843 B1**

(12) **EUROPEAN PATENT SPECIFICATION**

(45) Date of publication and mention
of the grant of the patent:
**31.07.2019 Bulletin 2019/31**

(21) Application number: **13721938.2**

(22) Date of filing: **29.04.2013**

(51) Int Cl.:
**H04W 28/26** *(2009.01)*    **H04W 88/14** *(2009.01)*
**H04W 72/04** *(2009.01)*

(86) International application number:
**PCT/EP2013/058902**

(87) International publication number:
**WO 2014/173465 (30.10.2014 Gazette 2014/44)**

(54) **CONFIGURATION OF COMMUNICATIONS LINK TO BACKHAUL HUB BASED ON CONTROL SIGNALLING RECEIVED PRIOR TO USER DATA**

KONFIGURATION VON KOMMUNIKATIONSVERBINDUNGEN ZU EINEM BACKHAUL-HUB AUF DER BASIS DES EMPFANGS VON KONTROLLSIGNALEN VOR BENUTZERDATEN

CONFIGURATION DE LIEN DE COMMUNICATIONS VERS CONCENTRATEUR DE LIAISON TERRESTRE BASÉE SUR LA SIGNALISATION DE COMMANDE REÇUE PRÉALABLEMENT À DES DONNÉES D'UTILISATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.04.2013 PCT/EP2013/058684**

(43) Date of publication of application:
**02.03.2016 Bulletin 2016/09**

(73) Proprietor: **Telefonaktiebolaget LM Ericsson (publ)**
**164 83 Stockholm (SE)**

(72) Inventors:
• **PERSSON, Anders**
 **S-442 97 Kode (SE)**
• **CARLSSON, Roland**
 **S-433 50 Öjersjö (SE)**
• **SAHLIN, Henrik**
 **S-435 41 Mölnlycke (SE)**

(74) Representative: **Ericsson Patent Development**
**Torshamnsgatan 21-23**
**164 80 Stockholm (SE)**

(56) References cited:
**EP-A1- 2 362 708        EP-A2- 2 398 160**
**WO-A1-2011/126437        WO-A1-2012/116754**
**GB-A- 2 454 872        GB-A- 2 481 715**
**US-A1- 2010 272 006        US-A1- 2010 272 007**

• **ERICSSON: "Resource State Measurements for RNs", 3GPP DRAFT; R3-113005, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. San Francisco, USA; 20111114 - 20111118, 4 November 2011 (2011-11-04), XP050566194, [retrieved on 2011-11-04]**

## Description

## TECHNICAL FIELD

Embodiments presented herein relate to mobile communication networks, and particularly to a method, a network node and a computer program and computer program product for providing a notification to configure a communications link to a backhaul hub in a mobile communication network.

## BACKGROUND

In mobile communication networks, there is always a challenge to obtain good performance and capacity for a given communications protocol, its parameters and the physical environment in which the mobile communication network is deployed.

Wireless backhaul is a proven technology for connecting network nodes such as radio base stations to the backbone network. The communications between the network node and the backbone network occurs between a backbone client provided at the network node and a backbone hub provided at the backbone network. Point-to-point microwave links have been used to provide this connectivity. Lately, so-called Point-to-MultiPoint (P2MP) systems have been considered. In P2MP systems one backhaul hub often provides connectivity to more than one backbone client. Such P2MP systems thus impose the need for multiplexing of more than one backhaul client. In a case there is a wireless communications link between the backbone client and the backbone hub a scheduled air interface is needed.

WO 2012/116754 A1 relates to link scheduling algorithm for OFDMA wireless networks with relay nodes. A relay node communicates with a user equipment UE over an access link and with a base station (Donor eNB, DeNB) over a backhaul link. The DeNB receives status information from the access link and the backhaul link and estimates access capacity and backhaul capacity. The DeNB then schedules, for the relay node, either a backhaul link activation or an access link activation such that either one of the backhaul link and the access link is activated, in a predetermined time interval, based on a comparison between the access capacity and the backhaul capacity.

WO 2011/126437 A1 relates to a relay node and a controlling node of an LTE network.

GB 2 481 715 A relates to control of transmission of data based on assessed/predicted radio conditions.

GB 2 454 872 A relates to performing serving cell management in a base station by determining backhaul loading.

ERICSSON: "Resource State Measurements for RNs", 3GPP draft, R3-113005, 4 November 2011 relates to resource state measurements for relay nodes.

EP 2 362 708 A1 relates to a method for performing a random access procedure by a relay node in a wireless or radio communication network, corresponding relay node and base station.

US 2010/272007 A1 relates to a protocol stack and scheduler for L3 relay.

US 2010/272006 A1 relates to design of in-band backhaul for wireless relays in wireless networks.

EP 2 398 160 A2 relates to a method for transmitting an uplink signal and feedback information, and relay apparatus using the method.

Hence, there is still a need for an improved backhaul communications.

## SUMMARY

An object of embodiments herein is to provide improved backhaul communications.

The inventors of the enclosed embodiments have realized that one parameter characteristic for backhaul communications is the data transmission delay that the backhaul results in. A particular object is therefore to provide improved backhaul communications by reducing the data transmission delay.

The invention is set out in the appended claims.

Exemplary aspects and embodiments are described in the following to illustrate the invention.

According to a first aspect there is presented a method for configuring a communications link. The method is performed by a network node functional unit. The method comprises wirelessly receiving control signalling from a user equipment. The control signalling relates to an uplink communications resource between the user equipment and the network node functional unit. The method comprises notifying, in response to receiving said control signalling and prior to receiving any user data associated with said control signalling from said user equipment on said uplink communications resource, a backhaul client functional unit to configure a communications link to a backhaul hub.

Advantageously this reduces the uplink data delay over a wireless backhaul. Advantageously this also reduces the time to prepare the backhaul for data transmission (i.e. to switch the backhaul from "idle mode" to "connected mode").

According to a second aspect there is presented a network node for configuring a communications link. The network node comprises a network node functional unit. The network node functional unit is arranged to wirelessly receive control signalling from a user equipment. The control signalling relates to an uplink communications resource between the user equipment and the network node functional unit. The network node functional unit is arranged to notify, in response to receiving the control signalling and prior to receiving any user data associated with the control signalling from the user equipment on the uplink communications resource, a backhaul client functional unit to configure a communications link to a backhaul hub.

According to a third aspect there is presented a computer program for configuring a communications link, the computer program comprising computer program code which, when run on a network node functional unit, causes the network node functional unit to perform a method according to the first aspect.

According to a fourth aspect there is presented a computer program product comprising a computer program according to the third aspect and a computer readable means on which the computer program is stored.

According to a fifth aspect there is presented a method for configuring a communications link. The method is performed by a backhaul client functional unit. The method comprises receiving a notification from a network node functional unit to configure a communications link to a backhaul hub, wherein the notification was issued in response to control signalling wirelessly received by the network node functional unit from a user equipment, the control signalling relating to an uplink communications resource between the user equipment and the network node functional unit, the notification having been issued prior to the network node functional unit receiving any user data associated with said control signalling from said user equipment on said uplink communications resource. The method comprises initiating configuration of said communications link to the backhaul hub.

According to a sixth aspect there is presented a network node for configuring a communications link. The network node comprises a backhaul client functional unit. The backhaul client functional unit is arranged to receive a notification from a network node functional unit to configure a communications link to a backhaul hub. The notification was issued in response to control signalling wirelessly received by the network node functional unit from a user equipment. The control signalling relates to an uplink communications resource between the user equipment and the network node functional unit. The notification has been issued prior to the network node functional unit receiving any user data associated with the control signalling from the user equipment on the uplink communications resource. The backhaul client functional unit is arranged to initiate configuration of the communications link to the backhaul hub.

According to a seventh aspect there is presented a computer program for configuring a communications link, the computer program comprising computer program code which, when run on a backhaul client functional unit, causes the backhaul client functional unit to perform a method according to the fifth aspect.

According to a eighth aspect there is presented a computer program product comprising a computer program according to the seventh aspect and a computer readable means on which the computer program is stored.

It is to be noted that any feature of the first, second, third, fourth, fifth, sixth, seventh and eighth aspects may be applied to any other aspect, wherever appropriate. Likewise, any advantage of the first aspect may equally apply to the second, third, fourth, fifth, sixth, seventh and/or eighth aspect, respectively, and vice versa. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

## BRIEF DESCRIPTION OF THE DRAWINGS

The inventive concept is now described, by way of example, with reference to the accompanying drawings, in which:

Figure 1 is a schematic diagram illustrating a mobile communication network where embodiments presented herein may be applied;

Figures 2-9 are signal flow diagrams according to embodiments;

Figure 10 is a schematic diagram showing functional units of a network node;

Figure 11 shows one example of a computer program product comprising computer readable means; and

Figures 12, 13, 14 and 15 are flowcharts of methods according to embodiments.

## DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

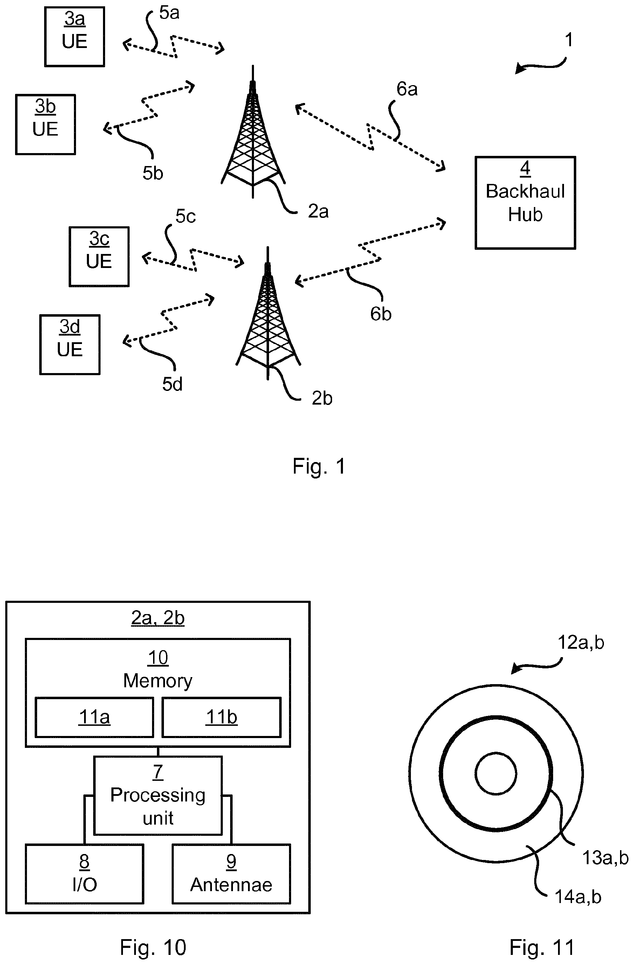

There exist several standardized radio access networks that offer wireless data communication. Common for most of all these radio access networks is that initial control signalling precedes the actual data transfer. In general terms, the initial control signalling indicates that there soon will be data transferred from the entity transmitting of the initial control signalling to the entity receiving the initial control signalling. Figure 1 is a schematic diagram illustrating a mobile communication network 1 where embodiments presented herein can be applied. The mobile communications network 1 comprises network nodes 2a, 2b, user equipment (UE) 3a, 3b, 3c, 3d and a backhaul hub 4. The term UE is also known as mobile communication terminal, mobile terminal, user terminal, user agent, mobile phone, etc. The term network node is also known as base station and may generally be a eNodeBs (E-UTRAN NodeB, also known as Evolved NodeB), a NodeB, a base transceiver station, or any type of similar base station. The network nodes 2a-b provide network connectivity to the UEs 3a-3d through wireless communications links 5a, 5b, 5c, 5d. In turn, the network nodes 2a-b are operatively connected to the backhaul hub 4 through wireless communications links 6a, 6b. The mobile communication network 1 may generally comply with any one or a combination of W-CDMA (Wideband Code Division Multiplex), LTE (Long Term Evolution), EDGE (Enhanced Data Rates for GSM Evolution, Enhanced GPRS (General Packet Radio Service)), CDMA2000 (Code Division Multiple Access 2000), etc., as long as the principles described hereinafter are applicable.

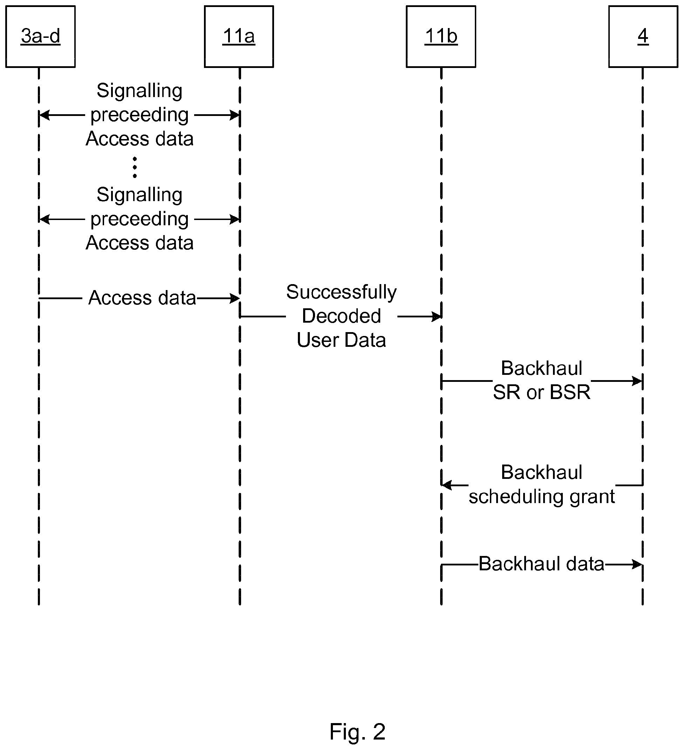

As will be further disclosed below, each network node 2a-b may comprise a network node functional unit and a backhaul client functional unit. The network node functional unit is responsible for handling the communications with the UE 3a-d and the backhaul client functional unit is responsible for handling the communications with the backhaul hub. Figure 2 illustrates an exemplary scenario where the communications between the UE 3a-d and the network node 2a-b as well as the communications between the network node 2a-b and the backhaul hub 4 is based on any wireless technology. In the exemplary scenario of Figure 2 the communications between the network node 2a-b and the backhaul hub 4 is based on LTE. Examples of signalling that precede the actual data transfer in a LTE system are 'Scheduling Request' (SR), 'Buffer Status Report' (BSR), 'Scheduling Grant' (SG), and 'Access Grant' (AG). As schematically illustrated in Figure 2, before access data (hereinafter denoted user data) is transmitted from the UE 3a-d to the network node functional unit 11a the UE 3a-d and the network node functional unit 11a exchange signalling preceding the user data. Such signalling is hereinafter denoted control signalling. After successfully decoded user data has been transmitted from the network node functional unit 11a to the backhaul client functional unit 11b the backhaul client functional unit 11b exchanges control signalling with the backhaul hub 4. According to the exemplary scenario of Figure 2 the control signalling involves SR, BSR and SG. Backhaul data may then be transmitted from the backhaul client functional unit 11b to the backhaul hub 4. In general trems, the trigger for the backhaul capacity is provided by a uplink (UL) grant sent fron the network functional unit 11a to the UE 3a-d.

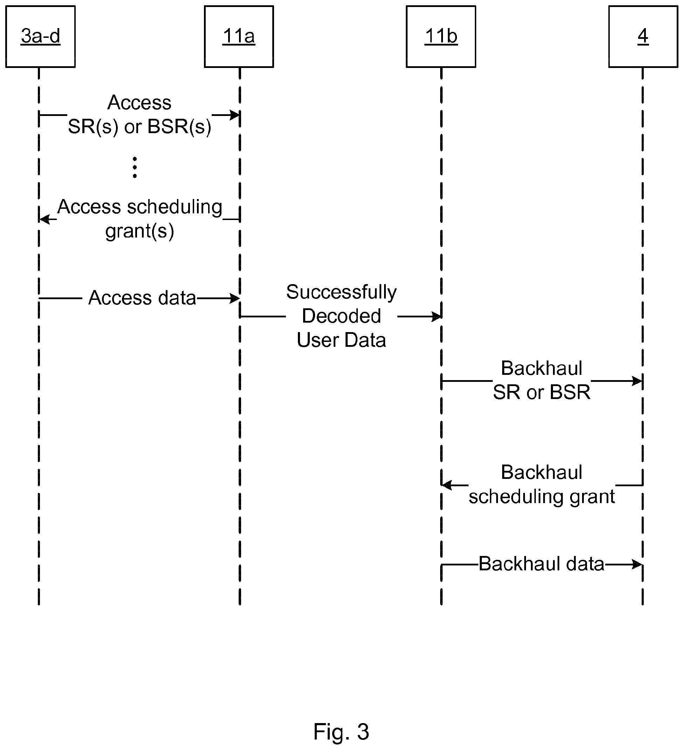

Scheduling in a conventional, data driven, wireless backhaul system is illustrated in Figure 3. Successfully decoded data on the communications link between the UE 3a-d and the network node functional unit 11a is provided to a buffer at the backhaul client functional unit 11b after control signalling between the network node functional unit 11a and the UE 3a-d and transmission of user data from the network node functional unit 11a to the UE 3a-d. The transition from an empty to a non-empty buffer triggers the backhaul client functional unit 11b to request backhaul resources from the backhaul hub 4, as described above with reference to Figure 2. The backhaul hub 4 grants resources and backhaul data is transmitted from the backhaul client functional unit 11b to the backhaul hub 4.

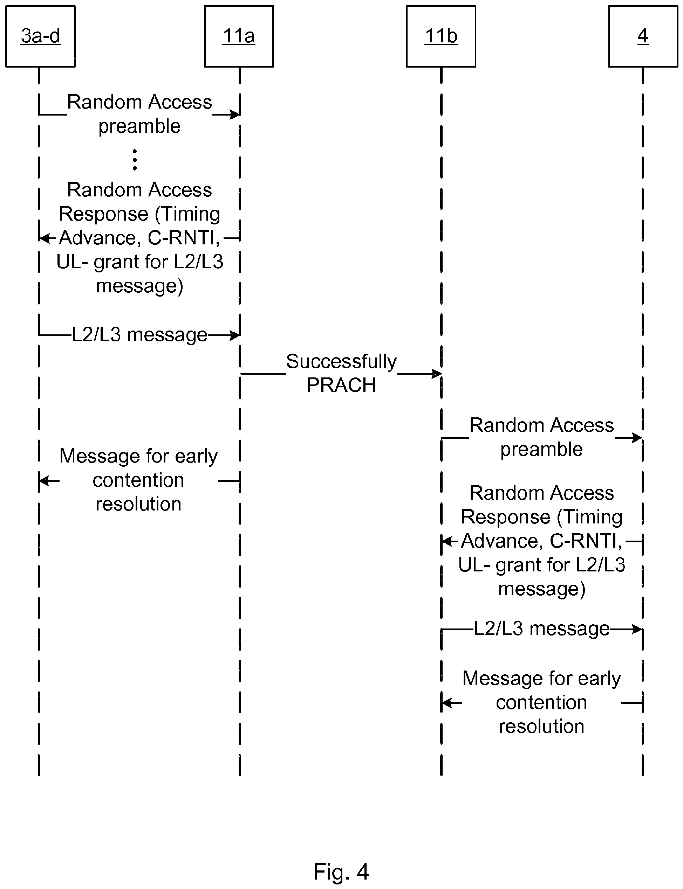

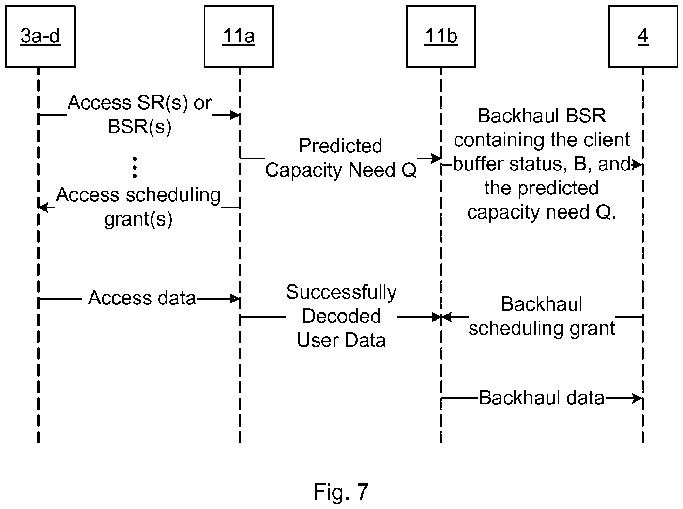

Figure 4 illustrates the same system as described with reference to Figure 3 but illustrates the control signalling if initial data shall be forwarded (i.e., so-called initial access). This may represent a scenario where data buffers in the UE 3a-d and in the backhaul client functional unit 11b were both empty when the data transfer need occurred in the UE 3a-d. The backhaul client functional unit 11b shall in such a case be prepared to forward data to the backhaul hub 4. This corresponds to scenarios where the backhaul switch from "Idle mode" to "Connected mode", described in Figure 7.1-1 in the 3GPP specification 25.331 v 11.4.0. In general terms, initial access is the first action in order to switch from "Initial mode" to "Connected mode" in order to prepare the backhaul for data forwarding. A physical random access channel (PRACH) is provided for the UE 3a-d to request access to the network by means of establishing a communications link to a network node 2a-b). This means that random access bursts should be detected with good confidence and, when detected, used for propagation delay estimation. Figure 4 shows the PRACH signalling scheme between a UE 3a-d and a network node functional unit 11a of a network node 2a-b. The signalling starts with the UE 3a-d transmitting a preamble within a predefined time window. Such a preamble is also part of the herein denoted control signalling. The network node functional unit thus needs to detect the incoming PRACH preamble and in return transmit a Random Access Response (RAR) containing an identifier of the used preamble within a given timeframe. The identifier includes the detected preamble and the time-frequency slot in which the preamble was detected. This RAR also contains timing alignment (TA) instructions, an initial uplink resource grant and an assignment of a Cell Radio Network Temporary Identifier (C-RNTI). In turn, the UE 3a-d responds to the network node functional unit with a so-called "Step 3 message".

The sequence of events in Figures 2 and 3 implies a relatively long data delay as the backhaul client functional unit 11b is enabled to initiate any signalling first when having observed that data has arrived at its buffers. Also, the PRACH sequence in Figure 4 implies a long delay from UE initiated PRACH until the backhaul is ready for data transmissions.

The embodiments disclosed herein relate to configuring a communications link 6a, 6b. The embodiments disclosed herein are based on the network node functional unit 11a and the backhaul client functional unit 11b have access to and make use of information that data soon will be forwarded from a UE 3a-d to a network node 2a-b. Such information may be used to speed up the data forwarding over the backhaul link 6a-b. Also, as the backhaul link 6a-b does not need to be 3GPP compliant, proprietary modifications can be made to improve backhaul performance further (in comparison to LTE compliant backhaul access). Moreover, in order to speed up transition from "Idle mode" to "Connected mode" for the backhaul, some embodiments disclosed herein are based on a speculative "radio resource control (RRC) connect request" to be forwarded from the backhaul client functional unit 11b to the backhaul hub based on random access transmission from the UE 3a-d to the network node functional unit 11a.

In order to obtain configuration of a communications link 6a, 6b there is provided a network node 2a-b comprising a network node functional unit 11a, a method performed by the network node functional unit, a computer program 13a comprising code, for example in the form of a computer program product 12a, that when run on the network node functional unit 11a, causes the network node functional unit 11a to perform the method. In order to obtain configuration of a communications link 6a, 6b there is further provided a network node 2a-b comprising a backhaul client functional unit 11b, a method performed by the backhaul client functional unit 11b, a computer program 13b comprising code, for example in the form of a computer program product 12b, that when run on the backhaul client functional unit 11b, causes the backhaul client functional unit 11b to perform the method.

Figure 10 schematically illustrates, in terms of a number of functional modules, the components of a network node 2a, 2b. A processing unit 7 is provided using any combination of one or more of a suitable central processing unit (CPU), multiprocessor, microcontroller, digital signal processor (DSP), application specific integrated circuit (ASIC), field programmable gate arrays (FPGA) etc., capable of executing software instructions stored in at least one computer program product 12a, 12b (as in Figure 11), e.g. in the form of a memory 10.

The memory 10 comprises instructions related to a network node functional unit 11a and to a backhaul client functional unit 11b. The network node functional unit 11a is thus arranged to hold functionality associated with the network node functional unit 11a. The backhaul client functional unit 11b is thus arranged to hold functionality associated with the backhaul client functional unit 11b. The memory 10 may also comprise persistent storage, which, for example, can be any single one or combination of magnetic memory, optical memory, solid state memory or even remotely mounted memory.

By accessing the memory 10 and/or the computer program product 12a, 12b the processing unit 7 is thereby arranged to execute methods as herein disclosed. The network node 2a, 2b may further comprise an input/output (I/O) interface 8 for receiving and providing information to other network nodes 2a, 2b The network node 2a, 2b may also comprises one or more transmitters and receivers as schematically denoted by the antennae 9, comprising analogue and digital components and a suitable number of antennae elements for radio communication with the UE 3a-d as well as the backhaul hub 4. The processing unit 7 controls the general operation of the network node 2a, 2b, e.g., by executing instructions as provided by the network node functional unit 11a and the backhaul client functional unit 11b. Other components, as well as the related functionality, of the network node 2a, 2b are omitted in order not to obscure the concepts presented herein.

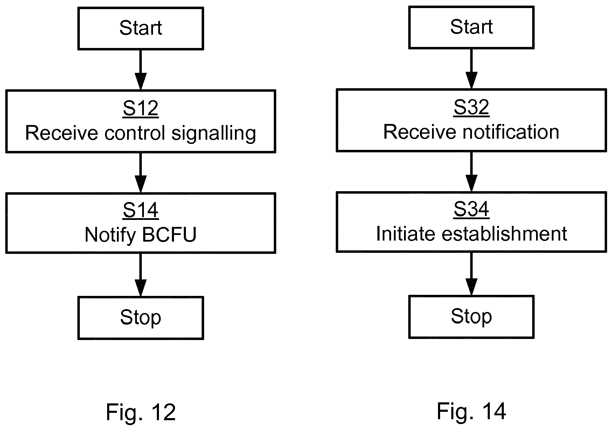

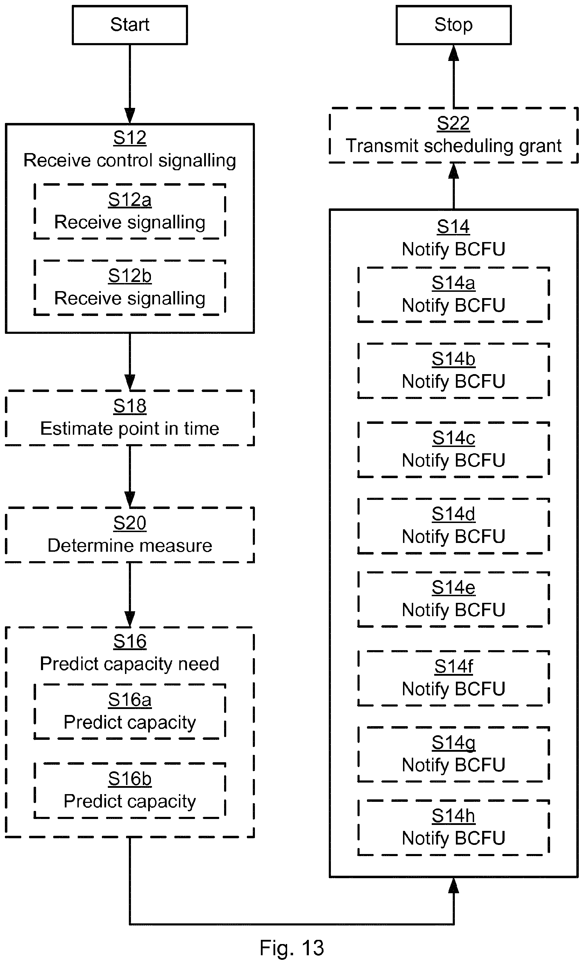

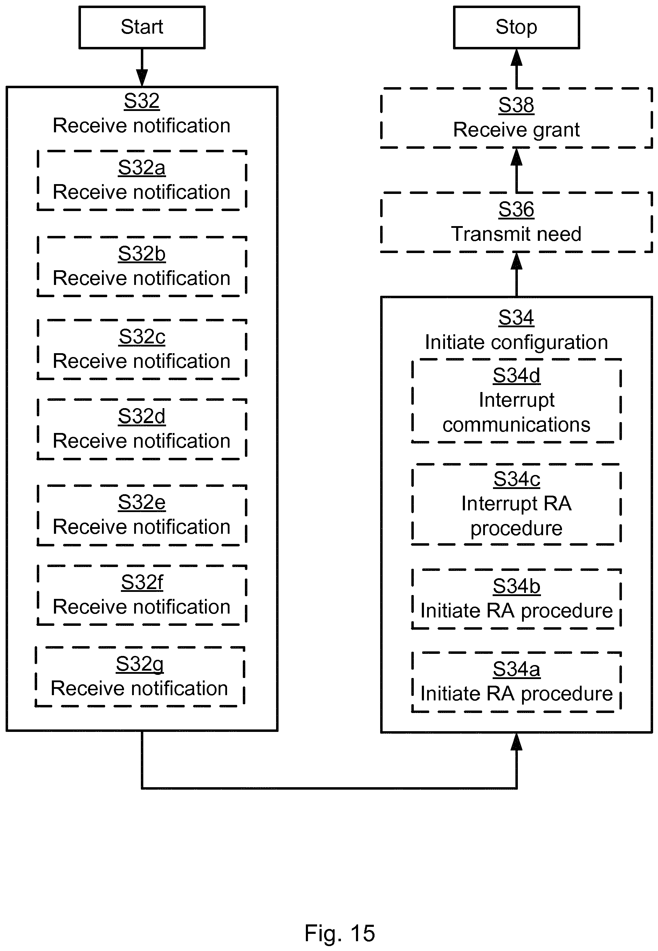

Figures 12, 13, 14 and 15 are flow charts illustrating embodiments of methods for configuring a communications link 6a, 6b. The methods of Figures 12 and 13 are performed by the network node functional unit 11a. The methods of Figures 12 and 13 are performed by the backhaul client functional unit 11b. The methods are advantageously provided as computer programs 13a, 13b. Figure 11 shows one example of a computer program product 12a, 12b comprising computer readable means 14a, 14b. On this computer readable means 14a, 14b, at least one computer program 13a, 13b can be stored, which at least one computer program 13a, 13b can cause the processing unit 7 and thereto operatively coupled entities and devices to execute methods according to embodiments described herein. In the example of Figure 11, the computer program product 12a, 12b is illustrated as an optical disc, such as a CD (compact disc) or a DVD (digital versatile disc) or a Blu-Ray disc. The computer program product 12a, 12b could also be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory. Thus, while the computer programs 13a, 13b are here schematically shown as a track on the depicted optical disk, the computer programs 13a, 13b can be stored in any way which is suitable for the computer program product 12a, 12b.

In general terms, the scheduler in a network node 2a, 2b is arranged to schedule resources in both downlink (i.e., transmission from a network node 2a, 2b to a UE 3a-d) and uplink (i.e., transmission from a UE 3a-d to a network node 2a, 2b). In the uplink, the scheduler needs information about the user data that is available in the buffers of the UE 3a-d. This is achieved by transmitting scheduling information messages from the UE 3a-d to the network node 2a, 2b to which the UE 3a-d is operatively connected. The scheduling information is transmitted as part of the Medium Access Layer Protocol (MAC) and can therefore be either piggybacked with other transmissions (when those are on-going) or be sent stand alone by creating MAC protocol data units (PDUs) just to transfer the scheduling information.

According to the herein disclosed subject matter the scheduler is part of the network node functional unit 11a. The scheduler at the network node 2a, 2b is able to, with relatively high accuracy, predict the amount of data that will be added to the backhaul client functional unit 11b based on the signalling preceding the actual data transfer. This predicted information can be forwarded to the backhaul client functional unit 11b with low delay and the backhaul client functional unit 11b can perform reservation of backhaul capacity in a speculative way, leading to reduced delay for backhaul transmission.

Returning now to Figure 1, the herein disclosed embodiments are in general terms based on the network node functional unit 11a evaluating (and predicting) a backhaul capacity need for a UE 3a-d based on signalling preceding actual data transfer from the UE 3a-d to the network node functional unit 11a. A method for configuring a communications link 6a, 6b as performed by a network node functional unit 11a thus comprises, in a step S12, wirelessly receiving control signalling from a user equipment, UE, 3a, 3b, 3c, 3d. The control signalling relates to an uplink communications resource between the UE 3a-d and the network node functional unit 11a.

The control signalling may be received over a physical uplink shared channel, PUSCH, or a physical uplink control channel, PUCCH. The communications resource may thus refer to a communications link 5a-d already having been established between the UE 3a-d and the network node functional unit 11a. Alternatively, and as will be further disclosed below, the control signalling may relate to initial access of the UE 3a-d to the network node functional unit 11a. According to one embodiment the communications resource may thus refer to a communications link 5a, 5b, 5c, 5d to be established between the UE 3a-d and the network node functional unit 11a. The control signalling may thus comprise a random access preamble or a response to the random access preamble. The control signalling may thus be received over a physical random access channel, PRACH.

The backhaul capacity need estimate is then sent to the backhaul client functional unit 11b. Particularly, the network node functional unit 11a is arranged to, in a step S14, notify the backhaul client functional unit 11b to configure a communications link 6a, 6b to a backhaul hub 4. In this respect, the communications link 6a, 6b to be configured may be an already established communications link 6a, 6b or a communications link 6a, 6b which is to be established (below referred to as initial access). Further, the configuration pertains to a change of at least one property of the communications link 6a, 6b. The change may involve change of amount of data to be transmitted, bit rate, scheduling, etc. The notifying is by the network node functional unit 11a performed in response to receiving the control signalling. The notifying is further performed prior to the network node functional unit 11a receiving any user data associated with the control signalling from the UE 3a-d on the uplink communications resource.

The notifying is received by the backhaul client functional unit 11b. A method for configuring a communications link 6a, 6b as performed by a backhaul client functional unit 11b thus comprises receiving, in a step S32, the notification from the network node functional unit 11a to configure the communications link 6a, 6b to the backhaul hub 4. The backhaul client functional unit 11b is then arranged to, in a step S34, initiate configuration of the communications link 6a-b to the backhaul hub 4. The backhaul hub 4 is thus arranged to receive signalling associated with the configuration from the backhaul client functional unit 11b.

As will be further disclosed next, a backhaul capacity grant issued by the backhaul hub 4 may be based on actual and/or predicted capacity need from all backhaul client functional units 11b operatively connected to the backhaul hub 4. Particularly, the network node functional unit 11a may be arranged to, in a step S16, predict a backhaul capacity need for transmitting user data from the backhaul client functional unit 11b to the backhaul hub 4. The prediction is based on the control signalling received by the network node functional unit 11a. The prediction may be based on at least one from a set of available parameters suitable for evaluation and prediction of the need of backhaul resources. In general terms the herein disclosed available parameters suitable for evaluation and prediction of the need of backhaul resources are indicative of a resource need.

For example, if present, the backhaul capacity need may be predicted based on a random access preamble in the control signalling. The random access preamble may imply that UL backhaul resources may be needed within a short period. For example, if present, the backhaul capacity need may be predicted based on a random access response in the control signalling. The random access response may imply, with an even larger probability than if a random access preamble is present, that UL backhaul resources may be needed resources within a short period.

For example, if present, the backhaul capacity need may be predicted based on a scheduling request (SR) in the control signalling. The SR may imply with a large probability that UL backhaul resources may be needed within a short period. For example, if present, the backhaul capacity need may be predicted based on an access grant (AG) in the control signalling, the AG following a SR. The AG may imply, with an even larger probability than if a SR is present, that UL backhaul resources may be needed within a short period.

For example, if present, the backhaul capacity need may be predicted based on a buffer status report (BSR) in the control signalling. The BSR may imply that there will be a specific need of UL backhaul resources within a short period. For example, if present, the backhaul capacity need may be predicted based on information in the control signalling regarding the amount of data in at least one uplink buffer originating from the UE 3a-d. This may indicate that there exists an immediate need of UL backhaul resources corresponding to the amount of data in the buffer. For example, if present, the backhaul capacity need may be predicted based on an AG in the control signalling, the AG following a BSR. The AG may imply, with an even larger probability than if a BSR is present, that UL backhaul resources may be needed within a short period. For example, if present, the backhaul capacity need may be predicted based on channel state information (CSI) in the control signalling. The network node functional unit 11a may be arranged to estimate of how the backhaul resource need indicated by BSR will change over time by means of the CSI.

The prediction may further be based on an amount of data generated by the network node functional unit 11a addressed to a network-side node, such as to another network node 2b or a backhaul hub 4. This prediction may correspond to the actual amount of data generated.

The notification with backhaul capacity need as sent in step S14 from the network node functional unit 11a to the backhaul client functional unit 11b may comprise a predicted estimate of backhaul need for the time when a grant is expected from the backhaul hub 4. The network node functional unit 11a may therefore be arranged to, in a step S18, estimate a point in time for a scheduling grant to be issued by the backhaul hub 11b. The scheduling grant pertains to the backhaul capacity need. The backhaul capacity need may be predicted based on said point in time.

The notification with backhaul capacity need as sent in step S14 from the network node functional unit 11a to the backhaul client functional unit 11b may alternatively be provided as a forecast of future backhaul need over close time. That is, the backhaul capacity need may be predicted for data transmission from the backhaul client functional unit 11b to the backhaul hub 4 over a predetermined period of time.

Information relating to the prediction may then be forwarded from the network node functional unit 11a to the backhaul client functional unit 11b and from the backhaul client functional unit 11b to the backhaul hub 4. Particularly, the network node functional unit 11a may be arranged to, in a step S14f, notify, in response to receiving the control signalling and prior to receiving any user data corresponding to the control signalling from the UE 3a-d on the uplink communications resource, the backhaul client functional unit 11b of the predicted backhaul capacity need. The network node functional unit 11a may further be arranged to, in a step S22, transmit a scheduling grant to the UE 3a-d in conjunction with notifying the backhaul hub functional 11a of the predicted backhaul capacity need. This may further reduce the time needed before any backhaul transmission may be executed.

The prediction information sent by the network node functional unit 11a is received by the backhaul client functional unit 11b. Particularly, the backhaul client functional unit 11b may be arranged to, in a step S32f, receive the notification from the network node functional unit 11a. The backhaul client functional unit 11b may then be arranged to, in a step S36, wirelessly transmit the predicted backhaul capacity need to the backhaul hub 4. The predicted backhaul capacity need is then received by the backhaul hub 4.

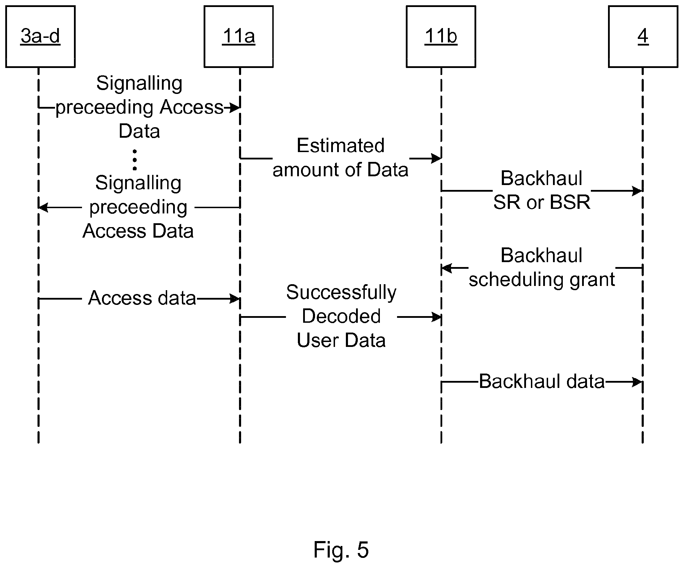

An advantage with providing a notification comprising a predicted estimate is that the backhaul hub 4 does not need to be involved in the prediction process. Hence, the backhaul hub 4 may in such scenarios act as a common network node 2a-b, such as an LTE eNodeB. In this context, the backhaul client functional unit 11b may act as a UE 3a-d, such as an LTE UE (except for handling prediction and estimation as herein disclosed). This is illustrated in Figure 5. In Figure 5 the network node functional unit 11a transmits a prediction to the backhaul client functional unit 11b before having received any user data from the UE 3a-d. As further illustrated in Figure 5, the backhaul client functional unit 11b may thereby initiate communications with the backhaul hub 4 before having received any user data from the network node functional unit 11a.

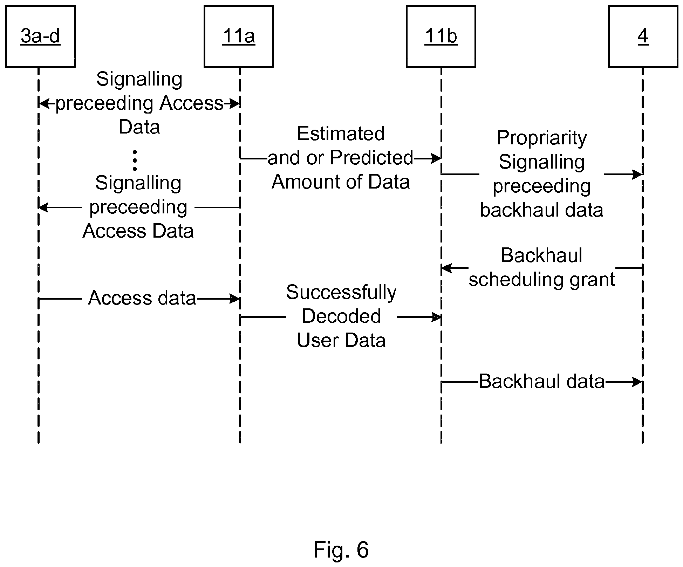

Alternatively, if the backhaul hub 4 receives a forecast of future backhaul need over close time from each operatively connected backhaul client functional unit 11b, the backhaul hub 4 may be enabled to determine scheduling decisions which take into consideration information from more than one client functional unit 11b. Moreover, the backhaul hub 4 may further be arranged to issue speculative grants with good result even if a new updated BSR is received late. This is illustrated in Figure 6.

A further alternative is that each backhaul client functional unit 11b sends a forecast of a future backhaul need and a corresponding reliability measure of this forecast to the backhaul hub 4. Therefore, the network node functional unit 11a may be arranged to, in a step S20, determine a reliability measure of the prediction. The network node functional unit 11a may then be arranged to, in a step S14g, notify the backhaul client functional unit 11b of the determined reliability measure in conjunction with the notification of the predicted backhaul capacity need. Thereby, for a backhaul client functional unit 11b that will receive user data with a probability less than 1 may only receive a speculative grant if no other backhaul client functional units 11b will receive user data with probability 1. This alternative is also covered by the steps illustrated in Figure 6.

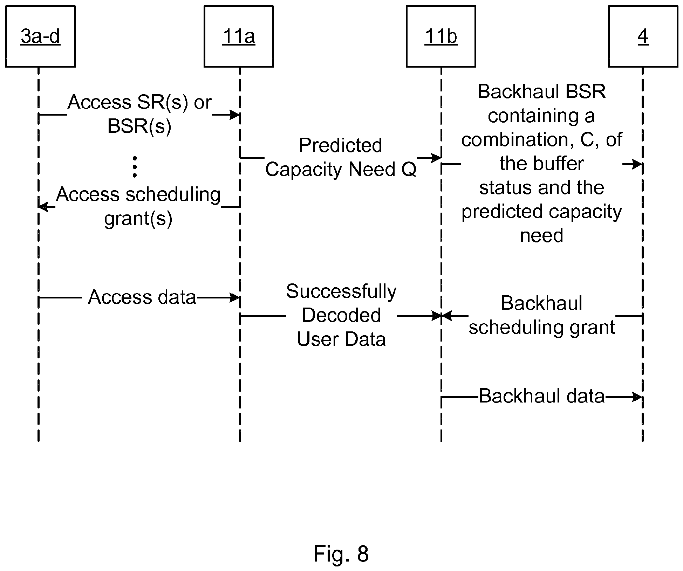

The LTE standard supports data streams with different priorities in such way that the UE 3a-d is arranged to inform the network node functional unit 11a of the buffer status for each priority class. Hence, the user data to be transmitted may be associated with at least two priority classes, and the control signalling from the UE 3a-d may comprise buffer status information from at least one of the at least two priority classes. A format which considers priority classes may thus be utilized for the LTE oriented wireless backhaul, thereby enabling the backhaul hub 4 scheduler to perform decisions based on data priority. This is illustrated in Figure 7. An alternative approach is illustrated in Figure 8. As noted above, the predicted backhaul capacity need may be based on parameters received by the network node functional unit 11a in the control signalling from the UE 3a-d. Additionally or alternatively the network node functional unit 11a may me arranged to determine the predicted backhaul capacity need based on other parameters, such as uplink communications resource between the UEs 3a-d and the network node functional unit 11a. Particularly, the network node functional unit 11a may be arranged to, in a step Si2a, wirelessly receive separate control signalling from $K_1$ number of UEs 3a-d, wherein each separate control signalling relates to an uplink communications resource between one UE 3a-d and the network node functional unit 11a. The network node functional unit 11a may then be arranged to, in a step Si6a, predict the backhaul capacity need, Q, as

$$Q = \Sigma_k \left( G_k \left( 1 - P_k \right) \right) [\text{bytes}]$$

where $\Sigma_k$ is the summations operator over the index k, where $0 < P_k < 1$ denotes hybrid automatic repeat request, HARQ, retransmission rate on the k:th access link, $1 < k < K$, and where $G_k$ denotes the access scheduling grant for the k:th access link, $1 < k < K_1$. The network node functional unit 11a may be further be arranged to, in a step Si2b, wirelessly receive separate control signalling from $K_2 < K_1$ number of UEs 3a-d, wherein each separate control signalling relates to an uplink communications resource between one UE 3a-d and the network node functional unit 11a. Further, for $K_2$, the network node functional unit 11a may be arranged to, in a step S16b, predict the backhaul capacity need, Q, as

$$Q = \Sigma_k \left( G_k \right) \quad [\text{bytes}],$$

where $\Sigma_k$ is the summations operator over the index k, where $G_k$ denotes the access scheduling grant for the k:th access link, $1 < k < K_2$. This alternative estimation of Q may be used in order to avoid assigning too small grants to transmit a complete OSI (Open Systems Interconnection) model layer-3 packet.

As the skilled person understands, these are just two examples of available ways to determine Q. For example, the backhaul capacity need, Q, may take into consideration also the magnitude of the $G_k$. For example, if all $G_k$ are ordered such that $G_i > G_{i+1}$ for all $i = 1, ..., K$, then Q could be estimated as

$$G_1 + \Sigma_{k>1} \left( G_k \left( 1 - P_k \right) \right) \quad [\text{bytes}].$$

The network node functional unit 11a may then be arranged to, in a step S14h, notify the backhaul client functional unit 11b to transmit Q and information regarding a current buffer status, B, of the backhaul client functional unit to the backhaul hub 4. B and Q may be transmitted either as separate values or as a single value, C, for example as C = B + Q.

Upon reception of this notification the backhaul client functional unit 11b may in turn me arranged to forward Q along with its current buffer status, B, as a backhaul BSR message to the backhaul hub 4. This enables the scheduler at the backhaul hub 4 to grant resources in advance (at most B+Q bytes) which in turn enables backhaul transmission to start immediately after user data is available in the buffer at the backhaul client functional unit 11b.

In general terms, the predicted backhaul capacity need may thus be based on control signaling from a plurality of UEs 3a-d. Particularly, the network node functional unit 11a may be arranged to, in a step Si2c, wirelessly receive further control signalling from at least one further u UE 3a-d, the further control signalling relating to user data to be transmitted between the at least one further UE 3a-d and the network node functional unit 11a. The network node functional unit 11a may then be arranged to, in a step S16b, predict the backhaul capacity need also based on the further control signalling. One such example has been provided above with reference to the determined backhaul capacity need Q. The predicted backhaul capacity need based on the further control signalling is transmitted to, and received by, the backhaul client functional unit 11b.

The backhaul client functional unit 11b may further receive predicted backhaul capacity needs from a plurality of network node functional units 11a. Particularly the backhaul client functional unit 11b may be arranged to, in a step S32g, receive a further notification from a further network node functional unit 11a, the further notification comprising a further predicted backhaul capacity need, the further predicted backhaul capacity need being based on further control signalling received by the further network node functional unit 11a. The backhaul client functional unit 11b may then be arranged to determine the predicted backhaul capacity need to be wirelessly transmitted to the backhaul hub 4 also based on the further predicted backhaul capacity need.

Further, as inferred from the above, the backhaul hub 4 may receive actual and/or predicted capacity needs from a plurality of backhaul client functional units 11b. The backhaul capacity grant issued by the backhaul hub 4 may therefore be based on actual and/or predicted capacity needs as transmitted from all backhaul client functional units 11b. The backhaul client functional unit 11b may therefore be arranged to, in a step S38, wirelessly receive a backhaul capacity grant from the backhaul hub 4 where the backhaul capacity grant is based on actual and/or the predicted capacity need from all backhaul client functional units 11b operatively connected to the backhaul hub 4.

In the embodiment illustrated in Figure 7 it may be assumed that a backhaul BSR is transmitted in every sub-frame (however, as will be understood from the below, this is not a necessary criterion). Clearly, this minimizes the queuing delay at the backhaul client functional unit 11b and the overhead is manageable as long as the number of backhaul client functional units 11b operatively connected to the backhaul hub 4 remains below a certain number of operatively connected devices. To maintain a low overhead also when there are a higher number of operatively connected devices, it may be necessary to reduce the BSR rate. In either case, Q may be regarded as a prediction of the number of bytes that will be added in the backhaul client functional unit 11b buffers until the next BSR. In addition to the B bytes that reside in the buffer at the backhaul client functional unit 11b when the backhaul BSR is transmitted, the backhaul hub 4 may be arranged to grant resources corresponding to an average data rate of Q/N bytes per sub-frame, where N is the number of sub frames between two backhaul BSRs. Further, assuming a wireless backhaul (i.e., wireless communications links 6a-b) that has similar performance characteristics as the LTE access network, an uplink scheduling grant sent in sub-frame n is valid in sub-frame n + 4. As a consequence thereof, the delay reduction achieved is 4 ms.

To reduce the BSR overhead further, the backhaul client functional unit 11b may be arranged to combine the current buffer status and the predicted capacity need into a single value. The backhaul client functional unit 11b may further be arranged to report this value to the backhaul hub 4. This is illustrated in Figure 8. In this and similar cases, the format for the BSR report can be used as it is specified in 3GPP/LTE. For example, the backhaul client functional unit 11b may report C = B + Q as the BSR.

As noted above, the control signalling may relate to initial access of the UE 3a-d to the network node functional unit 11a. As disclosed next, herein disclosed embodiments may in such scenarios enable the time to change from "Idle mode" to "Connected mode" to be reduced.

In general terms, if the backhaul is in "Idle mode" a random access preamble issued by a UE 3a-d may be regarded as an indicator to set the backhaul in "Connected mode". That the transmission of the random access preamble does not result in any further signalling does not matter since the UE 3a-d for some reason deems a connection to the network node functional unit 11a to be of use/need. For example, the UE 3a-d may at a later stage transmit a further random access preamble. The random access preamble may be regarded as the first step in the connection set-up between the UE 3a-d and the network node functional unit 11a.

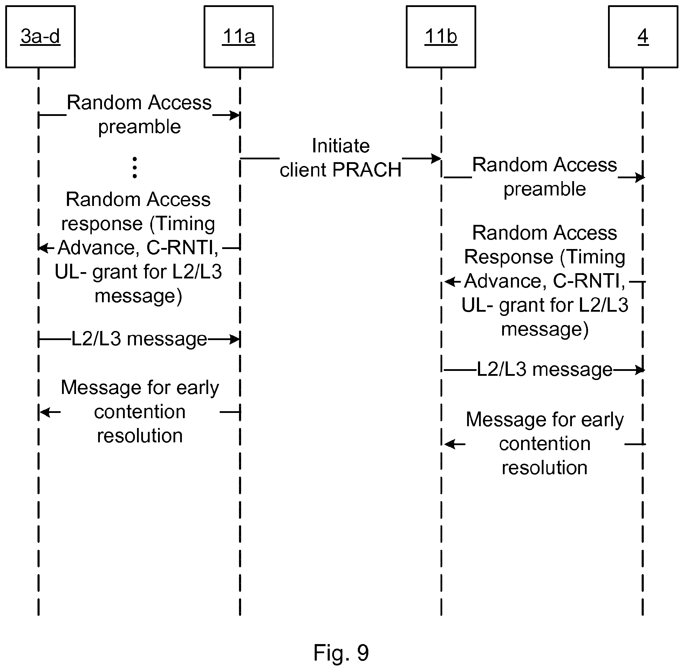

In this case the signalling flow according to Figure 9 follows. As soon as a random access preamble is received by the network node functional unit 11a a random access procedure may also be initiated between the backhaul client functional unit 11b and the backhaul hub 4. Particularly, the network node functional unit 11a may be arranged to, in a step S14a, notify the backhaul client functional unit 11b to initiate a random access procedure with the backhaul hub 4 in response to the network node functional unit 11b having received the control signalling from the network node functional unit 11a in step S32. The backhaul client functional unit 11b may thus be arranged to, in a step S32a, receive the notification from the network node functional unit 11a to configure the communications link by initiating a random access procedure with the backhaul hub 4. The backhaul client functional unit 11b may then be arranged to, in a step S34a, initiate the random access procedure with the backhaul hub 4.

This procedure may be initiated by the backhaul client functional unit 11b sending a random access preamble in the first available time and frequency interval allocated for random access. Therefore, the network node functional unit 11a may be arranged to, in a step S14b, notify the backhaul client functional unit to 11b initiate the random access procedure by wirelessly transmitting a random access preamble in a first available time and frequency interval allocated for random access between the backhaul client functional unit 11b and the backhaul hub 4. This notification is received by the backhaul client functional unit to 11b in a step S32b. The backhaul client functional unit to 11b may then be arranged to, in a step S34b, initiate the random access procedure by wirelessly transmitting the random access preamble in the first available time and frequency interval allocated for random access between the backhaul client functional unit 11b and the backhaul hub 4.

The network node functional unit 11a may determine a false detection of a random access preamble. In this case no L2/L3 message associated with the falsely detected random access preamble will be detected from the UE 3a-d and the random access procedure may be terminated by the network node functional unit 11a. The initiated random access procedure between the backhaul client functional unit 11b and the backhaul hub 4 may however already have been initiated but is of no use. At least two alternative procedures can then be followed by the backhaul client functional unit 11b.

One possible procedure is that the L2/L3 message from the backhaul client functional unit 11b is not transmitted to the backhaul hub 4 such that the random access procedure between the backhaul client functional unit 11b and the backhaul hub 4 is terminated. The network node functional unit 11a may therefore be arranged to, in a step S14c, notify the backhaul client functional unit to interrupt the initiated random access procedure by the backhaul client functional unit 11b by not transmitting any L2 and/or L3 messages to the backhaul hub 4. This notification is received by the backhaul client functional unit 11b in a step S32c. The backhaul client functional unit to 11b may then be arranged to, in a step S34c, interrupt the initiated random access procedure according to the received notification. The backhaul hub 4 may thus be arranged to regard the random access preamble transmitted by the backhaul client functional unit to 11b as a false detection.

An alternatively procedure is that the random access procedure between the backhaul client functional unit 11b and the backhaul hub 4 is finalized, but that the backhaul client functional unit 11b does not request any transmission on the thus established backhaul (i.e. on the communications link 6a-b) or reports an empty BSR to the backhaul hub 4. That is, in an embodiment where the random access procedure has been completed, the network node functional unit 11a may be arranged to, in a step S14d, notify the backhaul client functional unit 11b to interrupt further communications with the backhaul hub 4 by not requesting any transmission on the communications link 6a-b to the backhaul hub 4 or by transmitting an empty buffer status report (BSR) to the backhaul hub 4. This notification is received by the backhaul client functional unit 11b in a step S32d. The backhaul client functional unit to 11b may then be arranged to, in a step S34d, interrupt the further communications according to the received notification.

A yet further alternatively procedure is that the backhaul client functional unit 11b and the backhaul hub 4 already have established a connection. The backhaul client functional unit 11b may then send a scheduling request (SR) or buffer status report (BSR) instead when the network node functional unit 11a detects a random access preamble. That is, in an embodiment where the backhaul client functional unit 11b has established the communication link 6a-b to the backhaul hub 4, the network node functional unit 11a may be arranged to, in a step S14e, notify, the backhaul client functional unit 11b, upon having received the control signalling from the UE 3a-d, to transmit a scheduling request, SR, or buffer status report, BSR, to the backhaul hub 4. This notification is received by the backhaul client functional unit 11b in a step S32e. The backhaul client functional unit to 11b may then be arranged to perform the instructions as received in the notification.

The inventive concept has mainly been described above with reference to a few embodiments. However, as is readily appreciated by a person skilled in the art, other embodiments than the ones disclosed above are equally possible within the scope of the inventive concept, as defined by the appended patent claims. For example, the backhaul does not need to be 3GPP compliant. Proprietary modifications may thus be made to improve backhaul performance further compared to a LTE compliant backhaul access. Such modifications may enable the backhaul hub 4 to be aware of not only an estimate of the current resource need, but also of the prediction (future backhaul capacity need). This may enable the backhaul hub 4 to perform more intelligent scheduling decisions, which in turn may lead to yet further increased quality of service.

**Claims**

1. A method for notifying a backhaul client functional unit (11b) provided in a network node (2a, 2b) to configure a communications link (6a, 6b), comprising the steps of:

   wirelessly receiving (S12), by a network node functional unit (11a) provided in the network node (2a, 2b), control signalling from a user equipment (3a, 3b, 3c, 3d), the control signalling relating to an uplink communications resource between the user equipment and the network node functional unit; and
   notifying (S14), by the network node functional unit, in response to receiving said control signalling and prior to receiving any user data associated with said control signalling from said user equipment on said uplink communications resource, the backhaul client functional unit (11b) to configure a communications link (6a, 6b) to a backhaul hub (4).

2. The method according to claim 1, wherein the communications resource refers to a communications link (5a, 5b, 5c, 5d) to be established between the user equipment and the network node functional unit.

3. The method according to claim 1 or 2, wherein the control signalling comprises a random access preamble or a response to the random access preamble.

4. The method according to any one of the preceding claims, further comprising:
   notifying (S14a), by the network node functional unit, the backhaul client functional unit to initiate a random access procedure with the backhaul hub in response to the network node functional unit receiving the control signalling.

5. The method according to claim 4, further comprising:
   notifying (S14c), by the network node functional unit, the backhaul client functional unit to interrupt the initiated random access procedure by the backhaul client functional unit by not transmitting any L2 and/or L3 messages to the backhaul hub.

6. The method according to claim 4, wherein in a case the random access procedure has been completed, the method further comprises:
   notifying (S14d), by the network node functional unit,, the backhaul client functional unit to interrupt further communications with the backhaul hub by not requesting any transmission on the communications link to the backhaul hub or by transmitting an empty buffer status report to the backhaul hub.

7. The method according to any one of the preceding claims, wherein in a case the backhaul client functional unit has established the communication link to the backhaul hub, the method further comprises: notifying (S14e), by the network node functional unit, upon having received the control signalling, the backhaul client functional unit to transmit a scheduling request, SR, or buffer status report, BSR, to the backhaul hub.

8. The method according to any one of the preceding claims, further comprising:

    predicting (S16), by the network node functional unit, based on the received control signalling, a backhaul capacity need for transmitting user data from said backhaul client functional unit to said backhaul hub; and
    notifying (14f), by the network node functional unit,, in response to receiving said control signalling and prior to receiving said user data corresponding to said control signalling from said user equipment on said uplink communications resource, the backhaul client functional unit of the predicted backhaul capacity need.

9. The method according to claim 8, further comprising:

    determining (S20), by the network node functional unit, a reliability measure of the prediction; and
    notifying (S14g), by the network node functional unit, the backhaul client functional unit of the determined reliability measure to the backhaul client functional unit in conjunction with the predicted backhaul capacity need.

10. The method according to claim 7 or 8, wherein the user data to be transmitted is associated with at least two priority classes, and wherein the control signalling from the user equipment comprises buffer status information from at least one of said at least two priority classes.

11. The method according to any one of claims 8 to 10, further comprising: transmitting (S22), by the network node functional unit, a scheduling grant to the user equipment in conjunction with notifying the backhaul hub functional unit of the predicted backhaul capacity need.

12. The method according to any one of claims 8 to 11, further comprising:

    wirelessly receiving (S12c), by the network node functional unit, further control signalling from at least one further user equipment (3a, 3b, 3c, 3d), the further control signalling relating to user data to be transmitted between the at least one further user equipment and the network node functional unit; and
    predicting (S16b), by the network node functional unit, said backhaul capacity need also based on said further control signalling.

13. The method according to claim 1, further comprising:

    receiving (S32), by a backhaul client functional unit (11b), said notification from the network node functional unit (11a); and
    initiating (S34), by the backhaul client functional unit, configuration of said communications link to the backhaul hub.

14. The method according to claim 13, further comprising:

    receiving (S32a), by the backhaul client functional unit, a notification from the network node functional unit to configure the communications link by initiating a random access procedure with the backhaul hub, the notification having been issued in response to the network node functional unit receiving the control signalling; and
    initiating (S34a), by the backhaul client functional unit, said random access procedure with the backhaul hub.

15. The method according to claim 13, further comprising:

    receiving (S32c), by the backhaul client functional unit, a notification from the network node functional unit to interrupt the initiated random access procedure by not transmitting any L2 and/ or L3 messages to the backhaul hub; and
    interrupting (S34c), by the backhaul client functional unit, said initiated random access procedure according to said received notification.

16. The method according to any one of claims 13 to 15, wherein in a case the backhaul client functional unit has established the communication link to the backhaul hub, the method further comprises: receiving (S32e), by the backhaul client functional unit, a notification from the network node functional unit to transmit a scheduling request, SR, or buffer status report, BSR, to the backhaul hub, wherein the notification has been issued in response to the network node functional unit having received the control signalling from the user equipment.

17. The method according to any one of claims 13 to 16, further comprising:

receiving (S32f), by the backhaul client functional unit, a notification from the network node functional unit, the notification comprising a predicted backhaul capacity need, the predicted backhaul capacity need being based on the control signalling received by the network node functional unit and relating to a backhaul capacity need for transmitting user data from said backhaul client functional unit to said backhaul hub, which user data is to be transmitted using said uplink communications resource, wherein the notification has been issued in response to the network node functional unit having received said control signalling and prior to the network node functional unit having received user data corresponding to said control signalling from said user equipment on said uplink communications resource; and

wirelessly (S36), by the backhaul client functional unit, transmitting the predicted backhaul capacity need to the backhaul hub.

18. The method according to claim 17, further comprising:

receiving (S32g), by the backhaul client functional unit, a further notification from a further network node functional unit, the further notification comprising a further predicted backhaul capacity need, the further predicted backhaul capacity need being based on further control signalling received by the further network node functional unit and relating to a further backhaul capacity need for transmitting further user data from said backhaul client functional unit to said backhaul hub, wherein the further notification has been issued in response to the further network node functional unit having received said further control signalling and prior to the further network node functional unit having received said further user data corresponding to said further control signalling from at least one further user equipment; and

determining, by the backhaul client functional unit, the predicted backhaul capacity need to be wirelessly transmitted to the backhaul hub also based on said further predicted backhaul capacity need.

19. The method according to claim 16 or 17, further comprising:
wirelessly (S38) receiving, by the backhaul client functional unit, a backhaul capacity grant from the backhaul hub, the backhaul capacity grant being based on actual and/or said predicted capacity need from all backhaul client functional units operatively connected to the backhaul hub.

20. A network node (2a, 2b) for notifying a backhaul client functional unit (11b) to configure a communications link (6a, 6b), comprising:

the backhauf client functional unit (11b), and a network node functional unit (11a) arranged to wirelessly receive control signalling from a user equipment (3a, 3b, 3c, 3d), the control signalling relating to an uplink communications resource between the user equipment and the network node functional unit; and the network node functional unit (11a) further being arranged to notify, in response to receiving said control signalling and prior to receiving any user data associated with said control signalling from said user equipment on said uplink communications resource, the backhaul client functional unit (11b) to configure a communications link (6a, 6b) to a backhaul hub (4).

21. The network node according to claim 20, wherein:

the backhaul client functional unit (11b) is arranged to receive said notification from said network node functional unit (11a); and the backhaul client functional unit (11b) is further arranged to initiate configuration of said communications link to the backhaul hub

22. A computer program (13a, 13b) for notifying a backhaul client functional (11b) provided in a network node (2a, 2b) to configure a communications link (6a, 6b), the computer program comprising computer program code which, when run on a network node functional unit (11a) provided in the network node (2a, 2b), causes the network node functional unit to:

wirelessly receive (S12) control signalling from a user equipment (3a, 3b, 3c, 3d), the control signalling relating to an uplink communications resource between the user equipment and the network node functional unit; and notify (S14), in response to receiving said control signalling and prior to receiving any user data associated with said control signalling from said user equipment on said uplink communications resource, the backhaul client functional unit (11b) to configure a communications link (6a, 6b) to a backhaul hub (4).

23. The computer program according to claim 22, further comprising computer program code which, when run on a backhaul client functional unit (11b), causes the backhaul client functional unit to:

>     receive (S32) said notification from said network node functional unit (11a); and
>     initiate (S34) configuration of said communications link to the backhaul hub.

24. A computer program product (12a, 12b) comprising a computer program (13a, 13b) according to claim 22 or 23 and a computer readable means (14a, 14b) on which the computer program is stored.

**Patentansprüche**

1. Verfahren zum Benachrichtigen einer Backhaul-Client-Funktionseinheit (11b), die in einem Netzwerkknoten (2a, 2b) bereitgestellt ist, darüber, dass eine Kommunikationsverbindung (6a, 6b) konfiguriert werden soll, umfassend die Schritte des:

>     drahtlosen Empfangens (S12), durch eine im Netzwerkknoten (2a, 2b) bereitgestellte Netzwerkknoten-Funktionseinheit (11a), von Steuersignalisierung von einer Benutzerausrüstung (3a, 3b, 3c, 3d), wobei die Steuersignalisierung eine Uplink-Kommunikationsressource zwischen der Benutzerausrüstung und der Netzwerkknoten-Funktionseinheit betrifft; und
>     Benachrichtigens (S14) der Backhaul-Client-Funktionseinheit (11b) durch die Netzwerkknoten-Funktionseinheit in Antwort auf das Empfangen der Steuersignalisierung und vor dem Empfangen von mit der Steuersignalisierung verknüpften Benutzerdaten von der Benutzerausrüstung auf der Uplink-Kommunikationsressource darüber, dass eine Kommunikationsverbindung (6a, 6b) zu einem Backhaul-Hub (4) konfiguriert werden soll.

2. Verfahren nach Anspruch 1, wobei die Kommunikationsressource auf eine Kommunikationsverbindung (5a, 5b, 5c, 5d) verweist, die zwischen der Benutzerausrüstung und der Netzwerkknoten-Funktionseinheit aufgebaut werden soll.

3. Verfahren nach Anspruch 1 oder 2, wobei die Steuersignalisierung eine Direktzugriffspräambel oder eine Antwort auf die Direktzugriffspräambel umfasst.

4. Verfahren nach einem der vorstehenden Ansprüche, weiter umfassend:
Benachrichtigen (S14a) der Backhaul-Client-Funktionseinheit durch die Netzwerkknoten-Funktionseinheit in Antwort auf das Empfangen der Steuersignalisierung durch die Netzwerkknoten-Funktionseinheit darüber, dass eine Direktzugriffsprozedur mit dem Backhaul-Hub initiiert werden soll.

5. Verfahren nach Anspruch 4, weiter umfassend:
Benachrichtigen (S14c) der Backhaul-Client-Funktionseinheit durch die Netzwerkknoten-Funktionseinheit darüber, dass die initiierte Direktzugriffsprozedur von der Backhaul-Client-Funktionseinheit unterbrochen werden soll, indem keine L2- und/oder L3-Nachrichten an den Backhaul-Hub übertragen werden.

6. Verfahren nach Anspruch 4, wobei in einem Fall, dass die Direktzugriffsprozedur abgeschlossen wurde, das Verfahren weiter umfasst:
Benachrichtigen (S14d) der Backhaul-Client-Funktionseinheit durch die Netzwerkknoten-Funktionseinheit darüber, dass weitere Kommunikationen mit dem Backhaul-Hub unterbrochen werden sollen, indem keine Übertragung auf der Kommunikationsverbindung zum Backhaul-Hub angefragt wird, oder indem ein leerer Pufferstatusbericht an den Backhaul-Hub übertragen wird.

7. Verfahren nach einem der vorstehenden Ansprüche, wobei in einem Fall, dass die Backhaul-Client-Funktionseinheit die Kommunikationsverbindung zum Backhaul-Hub aufgebaut hat, das Verfahren weiter umfasst:
Benachrichtigen (S14e) der Backhaul-Client-Funktionseinheit durch die Netzwerkknoten-Funktionseinheit, nachdem dieselbe die Steuersignalisierung empfangen hat, darüber, dass eine Planungsanfrage, SR, oder ein Pufferstatusbericht, BSR, an den Backhaul-Hub übertragen werden soll.

8. Verfahren nach einem der vorstehenden Ansprüche, weiter umfassend:

>     Vorhersagen (S16), durch die Netzwerkknoten-Funktionseinheit auf Basis der empfangenen Steuersignalisierung, eines Backhaul-Kapazitätsbedarfs zum Übertragen von Benutzerdaten von der Backhaul-Client-Funktionseinheit an den Backhaul-Hub; und
>     Benachrichtigen (14f) der Backhaul-Client-Funktionseinheit durch die Netzwerkknoten-Funktionseinheit in Antwort auf das Empfangen der Steuersignalisierung und vor dem Empfangen der Benutzerdaten, die der Steuersignalisierung entsprechen, von der Benutzerausrüstung auf der Uplink-Kommunikationsressource, über den vorhergesagten Backhaul-Kapazitätsbedarf.

9. Verfahren nach Anspruch 8, weiter umfassend:

>     Bestimmen (S20), durch die Netzwerkknoten-Funktionseinheit, eines Zuverlässigkeitsmaßes der Vorhersage; und
>     Benachrichtigen (S14g) der Backhaul-Client-Funktionseinheit durch die Netzwerkknoten-Funktionseinheit über das bestimmte Zuverlässigkeitsmaß an die Backhaul-Client-Funktionseinheit in Verbindung mit dem vorhergesagten Backhaul-Kapazitätsbedarf.

10. Verfahren nach Anspruch 7 oder 8, wobei die Benutzerdaten, die übertragen werden sollen, mit mindestens zwei Prioritätsklassen verknüpft sind, und wobei die Steuersignalisierung von der Benutzerausrüstung Pufferstatusinformationen von mindestens einer der mindestens zwei Prioritätsklassen umfasst.

11. Verfahren nach einem der Ansprüche 8 bis 10, weiter umfassend:
Übertragen (S22), durch die Netzwerkknoten-Funktionseinheit, einer Planungsgenehmigung an die Benutzerausrüstung in Verbindung mit dem Benachrichtigen der Backhaul-Hub-Funktionseinheit über den vorhergesagten Backhaul-Kapazitätsbedarf.

12. Verfahren nach einem der Ansprüche 8 bis 11, weiter umfassend:

drahtloses Empfangen (S12c), durch die Netzwerkknoten-Funktionseinheit, von weiterer Steuersignalisierung von mindestens einer weiteren Benutzerausrüstung (3a, 3b, 3c, 3d), wobei die weitere Steuersignalisierung Benutzerdaten betrifft, die zwischen der mindestens einen weiteren Benutzerausrüstung und der Netzwerkknoten-Funktionseinheit übertragen werden sollen; und
Vorhersagen (S16b), durch die Netzwerkknoten-Funktionseinheit, des Backhaul-Kapazitätsbedarfs ebenfalls auf Basis der weiteren Steuersignalisierung.

13. Verfahren nach Anspruch 1, weiter umfassend:

Empfangen (S32), durch eine Backhaul-Client-Funktionseinheit (11b), der Benachrichtigung von der Netzwerkknoten-Funktionseinheit (11a); und
Initiieren (S34), durch die Backhaul-Client-Funktionseinheit, von Konfiguration der Kommunikationsverbindung zum Backhaul-Hub.

14. Verfahren nach Anspruch 13, weiter umfassend:

Empfangen (S32a), durch die Backhaul-Client-Funktionseinheit, einer Benachrichtigung von der Netzwerkknoten-Funktionseinheit darüber, dass die Kommunikationsverbindung konfiguriert werden soll, indem eine Direktzugriffsprozedur mit dem Backhaul-Hub initiiert wird, wobei die Benachrichtigung in Antwort auf das Empfangen der Steuersignalisierung durch die Netzwerkknoten-Funktionseinheit ausgegeben wurde; und
Initiieren (S34a), durch die Backhaul-Client-Funktionseinheit, der Direktzugriffsprozedur mit dem Backhaul-Hub.

15. Verfahren nach Anspruch 13, weiter umfassend:

Empfangen (S32c), durch die Backhaul-Client-Funktionseinheit, einer Benachrichtigung von der Netzwerkknoten-Funktionseinheit darüber, dass die initiierte Direktzugriffsprozedur unterbrochen werden soll, indem keine L2- und/oder L3-Nachrichten an den Backhaul-Hub übertragen werden; und
Unterbrechen (S34c), durch die Backhaul-Client-Funktionseinheit, der initiierten Direktzugriffsprozedur gemäß der empfangenen Benachrichtigung.

16. Verfahren nach einem der Ansprüche 13 bis 15, wobei in einem Fall, dass die Backhaul-Client-Funktionseinheit die Kommunikationsverbindung zum Backhaul-Hub aufgebaut hat, das Verfahren weiter umfasst:
Empfangen (S32e), durch die Backhaul-Client-Funktionseinheit, einer Benachrichtigung von der Netzwerkknoten-Funktionseinheit darüber, dass eine Planungsanfrage, SR, oder ein Pufferstatusbericht, BSR, an den Backhaul-Hub übertragen werden soll, wobei die Benachrichtigung in Antwort darauf ausgegeben wurde, dass die Netzwerkknoten-Funktionseinheit die Steuersignalisierung von der Benutzerausrüstung empfangen hat.

17. Verfahren nach einem der Ansprüche 13 bis 16, weiter umfassend:

Empfangen (S32f), durch die Backhaul-Client-Funktionseinheit, einer Benachrichtigung von der Netzwerkknoten-Funktionseinheit, wobei die Benachrichtigung einen vorhergesagten Backhaul-Kapazitätsbedarf umfasst, wobei der vorhergesagte Backhaul-Kapazitätsbedarf auf der von der Netzwerkknoten-Funktionseinheit empfangenen Steuersignalisierung basiert und einen Backhaul-Kapazitätsbedarf zum Übertragen von Benutzerdaten von der Backhaul-Client-Funktionseinheit an den Backhaul-Hub betrifft, welche Benutzerdaten unter Verwendung der Uplink-Kommunikationsressource übertragen werden sollen, wobei die Benachrichtigung ausgegeben wurde in Antwort darauf, dass die Netzwerkknoten-Funktionseinheit die Steuersignalisierung empfangen hat, und bevor die Netzwerkknoten-Funktionseinheit Benutzerdaten, die der Steuersignalisierung entsprechen, von der Benutzerausrüstung auf der Uplink-Kommunikationsressource empfangen hat; und drahtloses (S36) Übertragen, durch die Backhaul-Client-Funktionseinheit, des vorhergesagten Backhaul-Kapazitätsbedarfs an den Backhaul-Hub.

18. Verfahren nach Anspruch 17, weiter umfassend:

Empfangen (S32g), durch die Backhaul-Client-Funktionseinheit, einer weiteren Benachrichtigung von einer weiteren Netzwerkknoten-Funktionseinheit, wobei die weitere Benachrichtigung einen weiteren vorhergesagten Backhaul-Kapazitätsbedarf umfasst, wobei der weitere vorhergesagte Backhaul-Kapazitätsbedarf auf weiterer Steuersignalisierung basiert, die von der weiteren Netzwerkknoten-Funktionseinheit empfangen wird, und einen weiteren Backhaul-Kapazitätsbedarf zum Übertragen von weiteren Benutzerdaten von der Backhaul-Client-Funktionseinheit an den Backhaul-Hub betrifft, wobei die weitere Benachrichtigung ausgegeben wurde in Antwort darauf, dass die weitere Netzwerkknoten-Funktionseinheit die weitere Steuersignalisierung empfangen hat, und bevor die weitere Netzwerkknoten-Funktionseinheit die weiteren Benutzerdaten, die der weiteren Steuersignalisierung entsprechen, von mindestens einer weiteren Benutzerausrüstung empfangen hat; und Bestimmen, durch die Backhaul-Client-Funktionseinheit, des vorhergesagten Backhaul-Kapazitätsbedarfs, der drahtlos an den Backhaul-Hub übertragen werden soll, ebenfalls auf Basis des weiteren vorhergesagten Backhaul-Kapazitätsbedarfs.

19. Verfahren nach Anspruch 16 oder 17, weiter umfassend:
drahtloses (S38) Empfangen, durch die Backhaul-Client-Funktionseinheit, einer Backhaul-Kapazitätsgenehmigung vom Backhaul-Hub, wobei die Backhaul-Kapazitätsgenehmigung auf tatsächlichem und/oder dem vorhergesagten Kapazitätsbedarf von allen Backhaul-Client-Funktionseinheiten basiert, die betriebsmäßig mit dem Backhaul-Hub verbunden sind.

20. Netzwerkknoten (2a, 2b) zum Benachrichtigen einer Backhaul-Client-Funktionseinheit (11b) darüber, dass eine Kommunikationsverbindung (6a, 6b) konfiguriert werden soll, umfassend:

die Backhaul-Client-Funktionseinheit (11b), und eine Netzwerkknoten-Funktionseinheit (11a), die so eingerichtet ist, dass sie Steuersignalisierung von einer Benutzerausrüstung (3a, 3b, 3c, 3d) drahtlos empfängt, wobei die Steuersignalisierung eine Uplink-Kommunikationsressource zwischen der Benutzerausrüstung und der Netzwerkknoten-Funktionseinheit betrifft; und die Netzwerkknoten-Funktionseinheit (11a) weiter so eingerichtet ist, dass sie in Antwort auf das Empfangen der Steuersignalisierung und vor dem Empfangen von mit der Steuersignalisierung verknüpften Benutzerdaten von der Benutzerausrüstung auf der Uplink-Kommunikationsressource die Backhaul-Client-Funktionseinheit (11b) darüber benachrichtigt, dass eine Kommunikationsverbindung (6a, 6b) zu einem Backhaul-Hub (4) konfiguriert werden soll.

21. Netzwerkknoten nach Anspruch 20, wobei:

die Backhaul-Client-Funktionseinheit (11b) so eingerichtet ist, dass sie die Benachrichtigung von der Netzwerkknoten-Funktionseinheit (11a) empfängt; und die Backhaul-Client-Funktionseinheit (11b) weiter so eingerichtet ist, dass sie Konfiguration der Kommunikationsverbindung zum Backhaul-Hub initiiert.

22. Computerprogramm (13a, 13b) zum Benachrichtigen einer Backhaul-Client-Funktions (11b), die in einem Netzwerkknoten (2a, 2b) bereitgestellt ist, darüber, dass eine Kommunikationsverbindung (6a, 6b) konfiguriert werden soll, wobei das Computerprogramm Computerprogramm-Codemittel umfasst, der, wenn er auf einer im Netzwerkknoten (2a, 2b) bereitgestellten Netzwerkknoten-Funktionseinheit (11a) ausgeführt wird, die Netzwerkknoten-Funktionseinheit dazu bringt:

Steuersignalisierung von einer Benutzerausrüstung (3a, 3b, 3c, 3d) drahtlos zu empfangen (S12), wobei die Steuersignalisierung eine Uplink-Kommunikationsressource zwischen der Benutzerausrüstung und der Netzwerkknoten-Funktionseinheit betrifft; und in Antwort auf das Empfangen der Steuersignalisierung und vor dem Empfangen von mit der Steuersignalisierung verknüpften Benutzerdaten von der Benutzerausrüstung auf der Uplink-Kommunikationsressource, die Backhaul-Client-Funktionseinheit (11b) darüber zu benachrichtigen (S14), dass eine Kommunikationsverbindung (6a, 6b) zu einem Backhaul-Hub (4) konfiguriert werden soll.

23. Computerprogramm nach Anspruch 22, weiter Computerprogramm-Codemittel umfassend, der, wenn er auf einer Backhaul-Client-Funktionseinheit (11b) ausgeführt wird, die Backhaul-Client-Funktionseinheit dazu bringt:

die Benachrichtigung von der Netzwerkknoten-Funktionseinheit (11a) zu empfangen (S32); und

Konfiguration der Kommunikationsverbindung zum Backhaul-Hub zu initiieren (S34).

24. Computerprogrammprodukt (12a, 12b), das ein Computerprogramm (13a, 13b) nach Anspruch 22 oder 23 und ein computer-lesbares Mittel (14a, 14b) umfasst, auf dem das Computerprogramm gespeichert ist.


## Revendications

1. Procédé pour notifier à une unité fonctionnelle de client de liaison terrestre (11b) fournie dans un noeud de réseau (2a, 2b) de configurer un lien de communications (6a, 6b), comprenant les étapes suivantes :

   la réception sans fil (S12), par une unité fonctionnelle de noeud de réseau (11a) fournie dans le noeud de réseau (2a, 2b), d'une signalisation de commande provenant d'un équipement d'utilisateur (3a, 3b, 3c, 3d), la signalisation de commande concernant une ressource de communications de liaison montante entre l'équipement d'utilisateur et l'unité fonctionnelle de noeud de réseau ; et
   la notification (S14), en réponse à la réception de ladite signalisation de commande et préalablement à la réception de quelconques données d'utilisateur associées à ladite signalisation de commande provenant dudit équipement d'utilisateur sur ladite ressource de communications de liaison montante, à l'unité fonctionnelle de client de liaison terrestre (11b) de configurer un lien de communications (6a, 6b) vers un concentrateur de liaison terrestre (4).

2. Procédé selon la revendication 1, dans lequel la ressource de communications se rapporte à un lien de communications (5a, 5b, 5c, 5d) à établir entre l'équipement d'utilisateur et l'unité fonctionnelle de noeud de réseau.

3. Procédé selon les revendications 1 ou 2, dans lequel la signalisation de commande comprend un préambule d'accès aléatoire ou une réponse au préambule d'accès aléatoire.

4. Procédé selon l'une quelconque des revendications précédentes, comprenant en outre :
   la notification (S14a), par l'unité fonctionnelle de noeud de réseau, à l'unité fonctionnelle de client de liaison terrestre de lancer une procédure d'accès aléatoire avec le concentrateur de liaison terrestre en réponse à la réception de la signalisation de commande par l'unité fonctionnelle de noeud de réseau.

5. Procédé selon la revendication 4, comprenant en outre :
   la notification (S14c), par l'unité fonctionnelle de noeud de réseau, à l'unité fonctionnelle de client de liaison terrestre d'interrompre la procédure d'accès aléatoire lancée par l'unité fonctionnelle de client de liaison terrestre en ne transmettant aucun message L2 et/ou L3 au concentrateur de liaison terrestre.

6. Procédé selon la revendication 4, dans lequel dans le cas où la procédure d'accès aléatoire est terminée, le procédé comprend en outre :
   la notification (S14d), par l'unité fonctionnelle de noeud de réseau,, à l'unité fonctionnelle de client de liaison terrestre d'interrompre d'autres communications avec le concentrateur de liaison terrestre en ne demandant aucune transmission sur le lien de communications vers le concentrateur de liaison terrestre ou en transmettant un compte-rendu d'état de mémoire tampon vide au concentrateur de liaison terrestre.

7. Procédé selon l'une quelconque des revendications précédentes, dans lequel dans le cas où l'unité fonctionnelle de client de liaison terrestre a établi le lien de communication vers le concentrateur de liaison terrestre, le procédé comprend en outre :
   la notification (S14e), par l'unité fonctionnelle de noeud de réseau, après réception de la signalisation de commande, à l'unité fonctionnelle de client de liaison terrestre de transmettre une demande de programmation, SR, ou un compte-rendu d'état de mémoire tampon, BSR, au concentrateur de liaison terrestre.

8. Procédé selon l'une quelconque des revendications précédentes, comprenant en outre :

   la prévision (S16), par l'unité fonctionnelle de noeud de réseau, sur la base de la signalisation de commande reçue, d'un besoin de capacité de liaison terrestre pour transmettre des données d'utilisateur de ladite unité fonctionnelle de client de liaison terrestre audit concentrateur de liaison terrestre ; et
   la notification (14f), par l'unité fonctionnelle de noeud de réseau, en réponse à la réception de ladite signalisation de commande et préalablement à la réception desdites données d'utilisateur correspondant à ladite signalisation de commande provenant dudit équipement d'utilisateur sur ladite ressource de communications de liaison montante, de l'unité fonctionnelle de client de liaison terrestre du besoin prévu de capacité de liaison terrestre.

**9.** Procédé selon la revendication 8, comprenant en outre :

la détermination (S20), par l'unité fonctionnelle de noeud de réseau, d'une mesure de fiabilité de la prévision ; et
la notification (S14g), par l'unité fonctionnelle de noeud de réseau, à l'unité fonctionnelle de client de liaison terrestre de la mesure de fiabilité déterminée à l'unité fonctionnelle de client de liaison terrestre conjointement avec le besoin de capacité de liaison terrestre.

**10.** Procédé selon les revendications 7 ou 8, dans lequel les données d'utilisateur à transmettre sont associées à au moins deux classes de priorité, et dans lequel la signalisation de commande provenant de l'équipement d'utilisateur comprend des informations d'état de mémoire tampon provenant d'au moins une desdites au moins deux classes de priorité.

**11.** Procédé selon l'une quelconque des revendications 8 à 10, comprenant en outre :
la transmission (S22), par l'unité fonctionnelle de noeud de réseau, d'une autorisation de reprogrammation à l'équipement d'utilisateur conjointement avec la notification de l'unité fonctionnelle de concentrateur de liaison terrestre du besoin prévu de capacité de liaison terrestre.

**12.** Procédé selon l'une quelconque des revendications 8 à 11, comprenant en outre :

la réception sans fil (S12c), par l'unité fonctionnelle de noeud de réseau, d'une autre signalisation de commande provenant d'au moins un autre équipement d'utilisateur (3a, 3b, 3c, 3d), l'autre signalisation de commande concernant des données d'utilisateur à transmettre entre l'au moins un autre équipement d'utilisateur et l'unité fonctionnelle de noeud de réseau ; et
la prévision (S16b), par l'unité fonctionnelle de noeud de réseau, dudit besoin de capacité de liaison terrestre également sur la base de ladite autre signalisation de commande.

**13.** Procédé selon la revendication 1, comprenant en outre :

la réception (S32), par une unité fonctionnelle de client de liaison terrestre (11b), de ladite notification provenant de l'unité fonctionnelle de noeud de réseau (11a) ; et
le lancement (S34), par l'unité fonctionnelle de client de liaison terrestre, de la configuration dudit lien de communications vers le concentrateur de liaison terrestre.

**14.** Procédé selon la revendication 13, comprenant en outre :

la réception (S32a), par l'unité fonctionnelle de client de liaison terrestre, d'une notification provenant de l'unité fonctionnelle de noeud de réseau de configurer le lien de communications en lançant une procédure d'accès aléatoire avec le concentrateur de liaison terrestre, la notification ayant été émise en réponse à la réception de la signalisation de commande par l'unité fonctionnelle de noeud de réseau ; et
le lancement (S34a), par l'unité fonctionnelle de client de liaison terrestre, de ladite procédure d'accès aléatoire avec le concentrateur de liaison terrestre.

**15.** Procédé selon la revendication 13, comprenant en outre :

la réception (S32c), par l'unité fonctionnelle de client de liaison terrestre, d'une notification provenant de l'unité fonctionnelle de noeud de réseau d'interrompre la procédure d'accès aléatoire lancée en ne transmettant aucun message L2 et/ou L3 au concentrateur de liaison terrestre ; et
l'interruption (S34c), par l'unité fonctionnelle de client de liaison terrestre, de ladite procédure d'accès aléatoire lancée conformément à ladite notification reçue.

**16.** Procédé selon l'une quelconque des revendications 13 à 15, dans lequel dans le cas où l'unité fonctionnelle de client de liaison terrestre a établi le lien de communication vers le concentrateur de liaison terrestre, le procédé comprend en outre :
la réception (S32e), par l'unité fonctionnelle de client de liaison terrestre, d'une notification provenant de l'unité fonctionnelle de noeud de réseau de transmettre une demande de reprogrammation, SR, ou un compte-rendu d'état de mémoire tampon, BSR, au concentrateur de liaison terrestre, dans lequel la notification a été émise en réponse à la réception par l'unité fonctionnelle de noeud de réseau de la signalisation de commande provenant de l'équipement d'utilisateur.

**17.** Procédé selon l'une quelconque des revendications 13 à 16, comprenant en outre :

la réception (S32f), par l'unité fonctionnelle de client de liaison terrestre, d'une notification provenant de l'unité fonctionnelle de noeud de réseau, la notification comprenant un besoin prévu de capacité de liaison terrestre, le besoin prévu de capacité de liaison terrestre étant basé sur la signalisation de commande reçue par l'unité fonctionnelle de noeud de réseau et concernant un besoin de capacité de liaison terrestre pour transmettre des données d'utilisateur de ladite unité fonctionnelle de client de liaison terrestre audit concentrateur de liaison terrestre, lesdites données d'utilisateur devant être transmises à l'aide de ladite ressource de communications de liaison montante, dans lequel la notification a été émise en réponse à la réception par l'unité fonctionnelle de noeud de réseau de ladite signalisation de commande et préalablement à la réception par l'unité fonctionnelle de noeud de réseau de données d'utilisateur correspondant à ladite signalisation de commande provenant dudit équipement d'utilisateur sur ladite ressource de communications de liaison montante ; et

la transmission par l'unité fonctionnelle de client de liaison terrestre, sans fil (S36), du besoin prévu de capacité de liaison terrestre au concentrateur de liaison terrestre.

**18.** Procédé selon la revendication 17, comprenant en outre :

la réception (S32g), par l'unité fonctionnelle de client de liaison terrestre, d'une autre notification provenant d'une autre unité fonctionnelle de noeud de réseau, l'autre notification comprenant un autre besoin prévu de capacité de liaison terrestre, l'autre besoin prévu de capacité de liaison terrestre étant basé sur une autre signalisation de commande reçue par l'autre unité fonctionnelle de noeud de réseau et concernant un autre besoin de capacité de liaison terrestre pour transmettre d'autres données d'utilisateur de ladite unité fonctionnelle de client de liaison terrestre audit concentrateur de liaison terrestre, dans lequel l'autre notification a été émise en réponse à la réception par l'autre unité fonctionnelle de noeud de réseau de ladite autre signalisation de commande et préalablement à la réception par l'autre unité fonctionnelle de noeud de réseau desdites autres données d'utilisateur correspondant à ladite autre signalisation de commande provenant d'au moins un autre équipement d'utilisateur ; et

la détermination, par l'unité fonctionnelle de client de liaison terrestre, du besoin prévu de capacité de liaison terrestre à transmettre sans fil au concentrateur de liaison terrestre également sur la base dudit autre besoin prévu de capacité de liaison terrestre.

**19.** Procédé selon les revendications 16 ou 17, comprenant en outre :
la réception sans fil (S38), par l'unité fonctionnelle de client de liaison terrestre, d'une autorisation de capacité de liaison terrestre provenant du concentrateur de liaison terrestre, l'autorisation de capacité de liaison terrestre étant basée sur un besoin réel et/ou sur ledit besoin prévu de capacité de toutes les unités fonctionnelles de client de liaison terrestre reliées fonctionnellement au concentrateur de liaison terrestre.

**20.** Noeud de réseau (2a, 2b) pour notifier à une unité fonctionnelle de client de liaison terrestre (11b) de configurer un lien de communications (6a, 6b), comprenant :

l'unité fonctionnelle de client de liaison terrestre (11b), et
une unité fonctionnelle de noeud de réseau (11a) agencée pour recevoir sans fil une signalisation de commande provenant d'un équipement d'utilisateur (3a, 3b, 3c, 3d), la signalisation de commande concernant une ressource de communications de liaison montante entre l'équipement d'utilisateur et l'unité fonctionnelle de noeud de réseau ; et
l'unité fonctionnelle de noeud de réseau (11a) étant agencée en outre pour notifier, en réponse à la réception de ladite signalisation de commande et préalablement à la réception de quelconques données d'utilisateur associées à ladite signalisation de commande provenant dudit équipement d'utilisateur sur ladite ressource de communications de liaison montante, à l'unité fonctionnelle de client de liaison terrestre (11b) de configurer un lien de communications (6a, 6b) vers un concentrateur de liaison terrestre (4).

**21.** Noeud de réseau selon la revendication 20, dans lequel :

l'unité fonctionnelle de client de liaison terrestre (11b) est agencée pour recevoir ladite notification provenant de ladite unité fonctionnelle de noeud de réseau (11a) ; et
l'unité fonctionnelle de client de liaison terrestre (11b) est agencée en outre pour lancer la configuration dudit lien de communications vers le concentrateur de liaison terrestre.

**22.** Programme informatique (13a, 13b) pour notifier à une fonctionnelle de client de liaison terrestre (11b) fournie dans un noeud de réseau (2a, 2b) de configurer un lien de communications (6a, 6b), le programme informatique comprenant un codage de programme informatique qui, lorsqu'il est exécuté sur une unité fonctionnelle de noeud de réseau (11a) fournie dans le noeud de réseau (2a, 2b), amène l'unité fonctionnelle de noeud de réseau à :

recevoir sans fil (S12) une signalisation de commande provenant d'un équipement d'utilisateur (3a, 3b, 3c, 3d), la signalisation de commande concernant une ressource de communications de liaison montante entre l'équipement d'utilisateur et l'unité fonctionnelle de noeud de réseau ; et

notifier (S14), en réponse à la réception de ladite signalisation de commande et préalablement à la réception de quelconques données d'utilisateur associées à ladite signalisation de commande provenant dudit équipement d'utilisateur sur ladite ressource de communications de liaison montante, à la fonctionnelle de client de liaison terrestre (11b) de configurer un lien de communications (6a, 6b) vers un concentrateur de liaison terrestre (4).

**23.** Programme informatique selon la revendication 22, comprenant en outre un codage de programme informatique qui, lorsqu'il est exécuté sur une unité fonctionnelle de client de liaison terrestre (11b), amène l'unité fonctionnelle de client de liaison terrestre à :

recevoir (S32) ladite notification provenant de ladite unité fonctionnelle de noeud de réseau (11a) ; et
lancer (S34) la configuration dudit lien de communications vers le concentrateur de liaison terrestre.

**24.** Produit de programme informatique (12a, 12b) comprenant un programme informatique (13a, 13b) selon les revendications 22 ou 23 et un moyen lisible par ordinateur (14a, 14b) sur lequel le programme informatique est enregistré.

Fig. 1

Fig. 10

Fig. 11

Fig. 2

Fig. 3

Fig. 4

Fig. 5

Fig. 6

Fig. 7

Fig. 8

```
   3a-d              11a              11b               4

      Random Access   |                |                |
      |──── preamble ─────▶|           |                |
      |                |                |                |
      |       ⋮        |    Initiate    |__Random Access_|
      |                |  client PRACH  |   preamble     ▶
      | Random Access  |                |                |
      | response (Timing               | Random Access  |
      |◀Advance, C-RNTI,─|              | Response (Timing|
      | UL- grant for L2/L3            |◀Advance, C-RNTI,─|
      |    message)    |                | UL- grant for L2/L3
      |                |                |    message)    |
      |───L2/L3 message──▶|            |                |
      |                |                |───L2/L3 message──▶
      | Message for early              |                |
      |◀   contention  ─|             | Message for early|
      |    resolution  |               |◀   contention  ─|
      |                |                |    resolution  |
      |                |                |                |
      |                |                |                |
      |                |                |                |
```

Fig. 9

```
        ┌──────────────┐                    ┌──────────────┐
        │    Start     │                    │    Start     │
        └──────┬───────┘                    └──────┬───────┘
               │                                   │
               ▼                                   ▼
┌──────────────────────────┐        ┌──────────────────────────┐
│           S12            │        │           S32            │
│ Receive control signalling│        │   Receive notification   │
└────────────┬─────────────┘        └────────────┬─────────────┘
             │                                    │
             ▼                                    ▼
┌──────────────────────────┐        ┌──────────────────────────┐
│           S14            │        │           S34            │
│       Notify BCFU        │        │  Initiate establishment  │
└────────────┬─────────────┘        └────────────┬─────────────┘
             │                                    │
             ▼                                    ▼
      ┌──────────────┐                    ┌──────────────┐
      │     Stop     │                    │     Stop     │
      └──────────────┘                    └──────────────┘
```

Fig. 12                                Fig. 14

Fig. 13

Fig. 15

## REFERENCES CITED IN THE DESCRIPTION

### Patent documents cited in the description

- WO 2012116754 A1
- WO 2011126437 A1
- GB 2481715 A
- GB 2454872 A
- EP 2362708 A1
- US 2010272007 A1
- US 2010272006 A1
- EP 2398160 A2

### Non-patent literature cited in the description

- **ERICSSON.** Resource State Measurements for RNs. *3GPP draft, R3-113005,* 04 November 2011